# EUROPÄISCHE PATENTSCHRIFT

(11) **EP 0 950 498 B1**
(45) Veröffentlichungstag und Bekanntmachung des Hinweises auf die Patenterteilung: **16.05.2001**
(21) Anmeldenummer: 98103489.5
(22) Anmeldetag: 27.02.1998
(51) Int. Cl.: B29C 47/00, B29C 47/90

(54) **Kalibriervorrichtung**
Calibrating device
Dispositif de calibrage

(43) Veröffentlichungstag der Anmeldung: 20.10.1999
(73) Patentinhaber: Kömmerling Kunststoff GmbH, 66954 Pirmasens (DE)
(72) Erfinder: Kreuels, Olaf, 66482 Zweibrücken (DE); Trapp, Bernd, 76891 Bundenthal (DE); Sander, Ralf, Dr., 67657 Kaiserslautern (DE)
(74) Vertreter: Vièl, Christof, Dipl.-Ing.

(56) Entgegenhaltungen:
- US-A- 4 411 613
- MENGES G ET AL: "WARMEAUSGLEICHSRECHNUNG BEI DER EXTRUSION UND BEIM SCHWEISSEN" KUNSTSTOFFE, Bd. 79, Nr. 2, Februar 1989, Seiten 182-187, XP000028765

## Beschreibung

Die Erfindung betrifft eine Kalibriervorrichtung für Kunststoffprofile, bestehend aus mindestens einem wassergekühlten Kalibrator, an dessen innerer Kontur ein Kunststoffprofil mittels Vakuum kalibriert wird.

Derartige Kalibriervorrichtungen sind bekannt. Die Zuführung von Wasser und Vakuum an die Kalibratoren, von denen in der Regel drei bis fünf vorliegen, erfolgt über Schläuche an der Extrusionsanlage, was bei einem 5-fachen Kalibrierungsaufbau bis zu 50 Vakuumanschlüsse und bis zu 25 Wasseranschlüsse mit sich bringt. Dies bringt enorme Rüstzeiten sowie die Gefahr des Falschanschließens von Schläuchen mit sich. Ein falsch angeschlossener Schlauch kann jedoch das Ergebnis einer "Abspritzung" in der Einfahrphase verfälschen und somit zu einer Fehlbeurteilung der zu ergreifenden Maßnahmen führen.

Mit dem Ziel, Rüstzeiten und Fehlerquellen zu minimieren, wurden von einzelnen Herstellern andere Konsolensysteme realisiert. Diese Träger bestehen zumeist aus einer durchgehenden Aluminiumplatte, die entsprechend den Erfordernissen (Anzahl und Maße der Kanäle für Wasser- und Vakuumversorgung) ausgefräst wird. Alternativ kann die Platte auch aus Kunststoff bestehen. Nachteilig ist hier der erhöhte Materialbedarf für die auf den Träger aufgesetzten Kalibratoren, da die vielen internen Bohrungen räumlich untergebracht werden müssen und auch ein Reinigungsproblem darstellen können. Zusätzlich erlaubt diese Bauweise keine individuelle Kontroll- und Eingriffmöglichkeit der Wasser- und Vakuumkreisläufe der einzelnen Kalibrierungsbereiche während des Extrusionsprozesses. Weiterhin können bestehende Werkzeuge nicht nachgerüstet werden. Letzten Endes sind auch die Herstellungskosten für derartige einzelne Träger hoch. Ein Verschieben der Kalibratoren nach deren Montage in oder gegen Extrusionsrichtung auf dem Träger ist hierbei ebenfalls nicht möglich.

Aufgabe der Erfindung ist es somit, bei einer Kalibriervorrichtung nach dem Oberbegriff die dargestellten Nachteile zu vermeiden.

Diese Aufgabe wird erfindungsgemäß dadurch gelöst, daß unterhalb des Kalibrators ein Konsolenprofil vorgesehen ist, das sich über die Länge des Kalibrators bzw. der Kalibratoren erstreckt und das mindestens eine durchgehende Wasserkammer und mindestens eine durchgehende Vakuumkammer enthält, wobei die Vakuumkammer schlauchlos mit der Unterseite des Kalibrators verbindbar ist.

Das durchgehende Konsolenprofil ermöglicht Wasser- und Vakuum-Zufuhranschlüsse an den Seitenwänden und dient somit als eine zentrale Wasser- und Vakuumversorgung unterhalb des Kalibrators, wobei zumindest die Vakuumversorgung schlauchlos in die Unterseite des Kalibrators erfolgen kann. Als Profil ist das Konsolenprofil mit seinen Kammern einfach und kostengünstig zu fertigen. Die zentralen Wasseranschlüsse können an den Stirnseiten des Konsolenprofils als Zu- und Abfluß direkt in die bzw. aus den jeweiligen Wasserkammern angeordnet werden. Ebenso kann der Vakuumanschluß direkt an einer Stirnseite in die Vakuumkammer erfolgen.

Eine Weiterbildung der Erfindung besteht darin, daß zwei durchgehende Wasserkammern vorgesehen sind.

Dies ermöglicht eine höhere Flexibilität bei der Kalibrierung und eine Wasserzufuhr zu beiden Seiten des Kalibrators bzw. der Kalibratoren.

Vorteilhaft ist auch, daß mindestens eine, vorzugsweise zwei weitere Kammern vorgesehen sind, durch die das Konsolenprofil leichter wird und sich die Fertigung vereinfacht.

Diese können beispielsweise als Reservekammern dienen.

Eine Weiterbildung der Erfindung besteht darin, daß mindestens zwei Vakuumkammern vorgesehen sind.

Auf diese Weise können auf einem Konsolenprofil die Kalibratoren einer Doppelstrangextrusionsanlage mit Vakuum und Wasser versorgt werden.

Im Rahmen der Erfindung liegt auch, daß die Vakuumkammer in der Mitte des Konsolenprofils und die Wasserkammern beidseits der Vakuumkammer angeordnet sind.

Eine Ausbildung der Erfindung besteht darin, daß die Vakuumkammer bzw. die Vakuumkammern in der Mitte des Konsolenprofils und die Wasserkammern sowie die weiteren Kammern beidseits der Vakuumkammer bzw. der Vakuumkammern angeordnet sind, wobei beidseits jeweils eine Wasserkammer und eine weitere Kammer vorgesehen sind.

Es ist auch zweckmäßig, daß die weiteren Kammern im oberen Bereich des Profils zu dem Kalibrator hin angeordnet sind, daß die weiteren Kammern weniger breit als die Wasserkammern sind und daß mindestens eine der Wasserkammern schlauchlos mit der Unterseite des Kalibrators verbunden ist.

Somit kann auch die Wasserversorgung schlauchfrei erfolgen, was zu einer weiteren Verminderung der Rüstzeiten beiträgt.

Ebenso ist es erfindungsgemäß, daß seitliche Bohrungen durch das Konsolenprofil bis in die Wasserkammer bzw. in die Wasserkammern vorgesehen sind.

Gleichfalls kann es zweckmäßig sein, daß seitliche Bohrungen durch das Konsolenprofil bis in die Vakuumkammer vorgesehen sind.

Es liegt auch im Rahmen der Erfindung, daß die seitlichen Bohrungen Anschlußstutzen für Schläuche zur Wasserversorgung des Kalibrators aufweisen.

Weiterhin ist es vorteilhaft, daß die seitlichen Bohrungen Anschlußstutzen für Schläuche zur Vakuumversorgung des Kalibrators aufweisen.

Eine Weiterbildung der Erfindung besteht darin, daß die Kalibriervorrichtung Verbindungsmittel zum Befestigen von Kalibratoren aufweist.

Schließlich ist es erfindungsgemäß, daß die durchgehende Vakuumkammer in dem Konsolenprofil unterteilbar ist.

Die Vorteile der Erfindung bestehen somit im wesentlichen darin, daß deutlich weniger Schlauchanschlüsse an der Extrusionsanlage erforderlich sind und somit die Rüstzeiten und die Fehlerquote beim Rüsten verringert werden. Gleichfalls wird durch den Wegfall der Schnellkupplungen für die Schläuche an den Extrusionsanlagen eine Kostenreduzierung erreicht und der Platzbedarf beim Lagern sowie die Unfallgefahr aufgrund der großen Schlauchschlaufen am Werkzeug verringern sich.

Weitere Vorteile sind:
- Freie Wahl zwischen der Vorverschlauchung von Wasser und Vakuum über kurze Schlauchbrücken zwischen Konsolenprofil und Kalibrator(en) oder der kalibrator-internen Versorgung durch die Grundplatten der Kalibratoren.
- Nachrüstbarkeit vorhandener Werkzeuge unter Verwendung von kurzen Schlauchbrücken zwischen Konsolenprofil und Kalibrator(en), die heute noch komplett an den Extrusionsanlagen einzeln verschlaucht werden müssen.
- Durch die Verwendung von kurzen Schlauchbrücken zwischen Konsolenprofil und Kalibrator(en) reduzieren sich die kalibrierungsintern erforderlichen Bohrungen und folglich lassen sich die Außenabmessungen der Kalibratoren auf ein Minimum reduzieren.
- Die Kalibratoren können alle zusammen über eine durchgehende Vakuumkammer mit nur einem Vakuum-Hauptanschluß versorgt werden. Optional kann aber auch jeder Kalibrator einzeln mit Vakuum, d.h. über einem eigenen Vakuum-Hauptanschluß, versorgt werden, indem die durchgehende Vakuumkammer in dem Konsolenprofil, beispielsweise durch "Schieber", an beliebigen Stellen unterteilt wird.
- Konstruktiv und fertigungstechnisch ist die Wasserzu- und abfuhr sowie die Vakuumevakuierung über (externe) Schläuche - sowohl mit dem Konsolenprofil vorverschlaucht wie hier vorgestellt, oder individuell an der Extrusionsanlage wie bisher üblich - einfacher zu realisieren als eine rein interne Versorgung durch den Kalibrator selbst, da die einzelnen Kalibrierungseinzelbereiche konstruktiv nahezu unabhängig voneinander betrachtet werden können. Eine kostensparende Standardisierung im Kalibratoraufbau auch über unterschiedliche Produktgruppen (z.B. Rahmen-, Flügel- und Kämpferprofile) ist deshalb konsequenter durchzuführen. Zusätzlich erlaubt eine Verschlauchung eine individuelle Kontroll- und Eingriffmöglichkeit der einzelnen Kalibrierungsbereiche im Extrusionsbetrieb.

Im folgenden werden Ausführungsbeispiele der Erfindung anhand von Zeichnungen dargestellt. Es zeigen:
- Fig. 1: eine geschnittene Darstellung einer erfindungsgemäßen Kalibriervorrichtung,
- Fig. 2: eine geschnittene Darstellung eines erfindungsgemäßen Konsolenprofils für die Einzelstrangextrusion,
- Fig. 3: eine geschnittene Darstellung eines erfindungsgemäßen Konsolenprofils für die Doppelstrangextrusion.

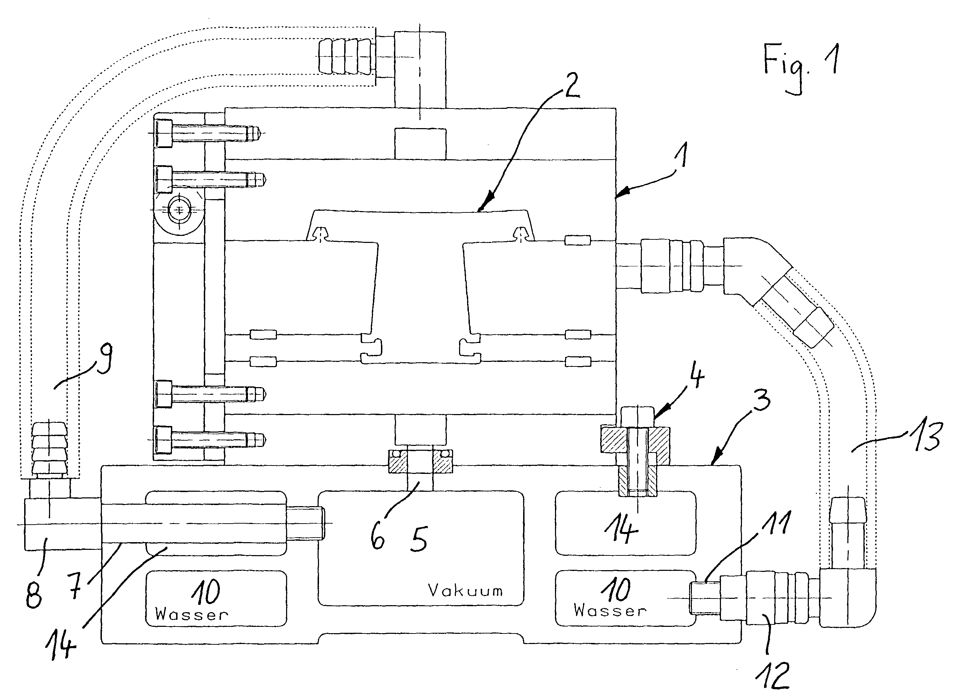

Die in Fig. 1 dargestellte erfindungsgemäße Kalibriervorrichtung besteht aus mindestens einem Kalibrator 1, an dessen innerer Kontur 2 ein Kunststoffprofil mittels Vakuum kalibriert wird. Zur Kühlung des Kalibrators 2 wird ein kontinuierlicher Wasserstrom benötigt.

Zur Versorgung des Kalibrators 1 mit Vakuum und Wasser ist der Kalibrator 1 auf einem Konsolenprofil 3 angeordnet. Die Festlegung des Kalibrators 1 auf dem Konsolenprofil 3 kann durch übliche Verbindungsmittel, wie die dargestellte Schraubverbindung 4 erfolgen.

Das Konsolenprofil 3 besteht aus einem länglichen Körper, der auf die Gesamtlänge der hintereinander angeordneten Kalibratoren 1 abgelängt werden kann. Das Konsolenprofil 3 weist mehrere, sich über die volle Länge des Konsolenprofils 3 erstreckende Kammern auf, wobei über seitliche Anschlüsse an dem Konsolenprofil 3 der Zufluß und direkt aus dem in Extrusionsrichtung letzten Kalibrator der Abfluß von Medien erfolgen kann.

In der Mitte des Konsolenprofils 3 ist eine Vakuumkammer 5 angeordnet, die durch eine Bohrung 6 (oder einen anderen Anschluß) schlauchlos mit der Unterseite des Kalibrators 1 verbunden ist. Zum Aufbringen des Vakuums genügt also das Befestigen des Kalibrators 1 auf dem Konsolenprofil 3 im Bereich einer Bohrung 6. Zusätzlich kann eine Vakuumzufuhr von der Vakuumkammer 5 zu dem Kalibrator 1 auch über eine seitliche Bohrung 7 durch das Konsolenprofil 3 bis in die Vakuumkammer 5 erfolgen, wobei die Bohrung 7 dann mit einem Anschlußstutzen 8 für einen Vakuumschlauch 9 zu versehen ist.

Beidseits der Vakuumkammer 5 sind Wasserkammern 10 angeordnet, die ebenfalls über seitliche Bohrungen 11, Anschlußstutzen 12 und Kühlwasserschläuche 13 die Kühlwasserversorgung des Kalibrators 1 sicherstellen.

Bei diesem Aufbau wird das Werkzeug mit der Konsole bereits vorverschlaucht an die Produktion übergeben. Dort werden nur noch die erforderlichen Hauptanschlüsse (max. 6) für Wasser und Vakuum an die Konsole angeschlossen. Dadurch reduziert sich der Rüstungs-, Prüfüngs- und Wartungsaufwand.

Des weiteren weist das Konsolenprofil 3 zwei weitere Kammern 14 auf, die einerseits erforderlich sein können, um bei der Herstellung des Konsolenprofils 3 Spannungen aufgrund stark variierender Wanddicken zu vermeiden und andererseits zur Material- und damit Gewichtseinsparung dienen.

Das Konsolenprofil 3 kann beispielsweise aus Aluminium bestehen, was eine sehr kostengünstige Fertigung des Konsolenprofils 3, beispielsweise durch Strangpressen, ermöglicht. Das Konsolenprofil 3 aus Aluminium kann beispielsweise anodisiert sein.

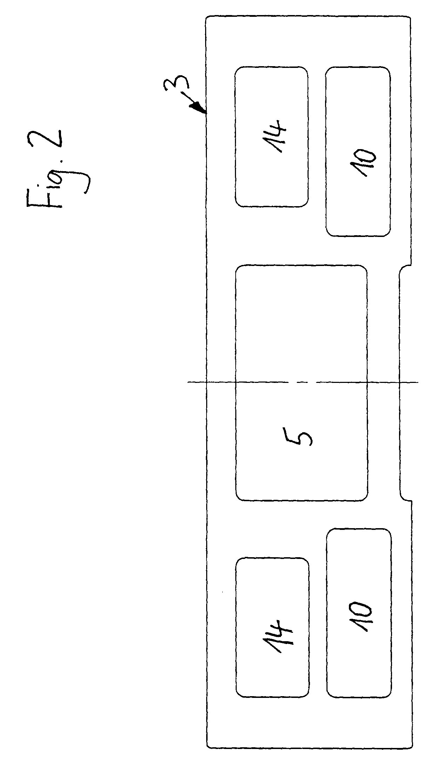

Fig. 2 zeigt ein Konsolenprofil 3, das ebenfalls eine zentrale Vakuumkammer 5 sowie beidseits dieser Vakuumkammer 5 jeweils eine Wasserkammer 10 und eine weitere Kammer 14 aufweist. Hierbei sind die weiteren Kammern 14 weniger breit als die Wasserkammern 10 und ermöglichen somit Bohrungen . (nicht dargestellt) durch den Bereich zwischen der Vakuumkammer 5 und der weiteren Kammer 14, um die Wasserkammer 10 mit der Unterseite des Kalibrators 1 zu verbinden und so die Wasserversorgung des Kalibrators 1 ebenfalls (zumindest teilweise) schlauchlos zu gestalten.

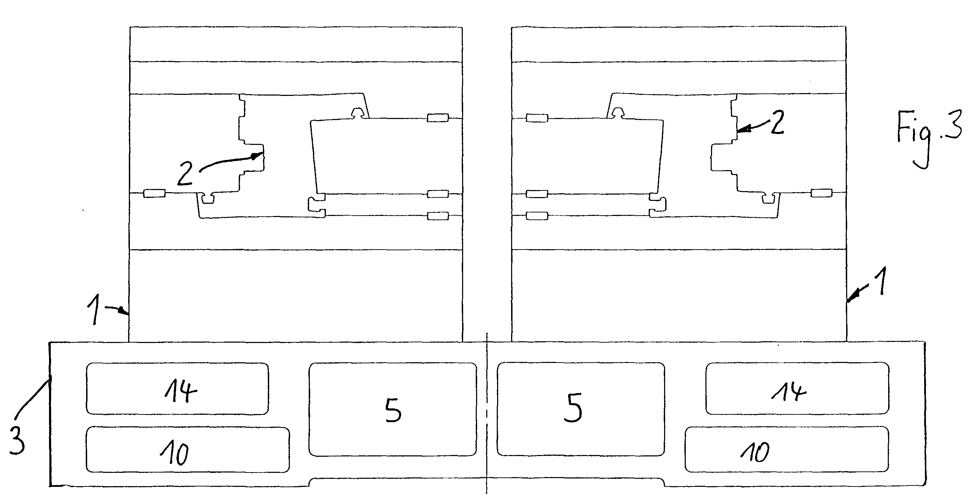

Fig. 3 stellt schließlich eine Doppelstrangextrusionsvorrichtung dar, in der zwei Kalibratoren 1 auf einem Konsolenprofil 3 angeordnet ist, das zwei nebeneinander angeordnete zentrale Vakuumkammern 5 aufweist und jeweils eine Wasserkammer 10 und eine weitere Kammer 14 beidseits derVakuumkammern 5.

## Patentansprüche

1. Kalibriervorrichtung für Kunststoffprofile, bestehend aus mindestens einem wassergekühlten Kalibrator, an dessen innerer Kontur ein Kunststoffprofil mittels Vakuum kalibriert wird, **dadurch gekennzeichnet,** daß unterhalb des Kalibrators (1) ein Konsolenprofil (3) vorgesehen ist, das sich über die Länge des Kalibrators (1) bzw. der Kalibratoren (1) erstreckt und das mindestens eine durchgehende Wasserkammer (10) und mindestens eine durchgehende Vakuumkammer (5) enthält, wobei die Vakuumkammer (5) schlauchlos mit der Unterseite des Kalibrators (1) verbindbar ist.

2. Kalibriervorrichtung gemäß Anspruch 1, **dadurch gekennzeichnet,** daß mindestens zwei durchgehende Wasserkammern (10) vorgesehen sind.

3. Kalibriervorrichtung gemäß Anspruch 1 oder Anspruch 2, **dadurch gekennzeichnet,** daß mindestens eine, vorzugsweise zwei weitere Kammern (14) vorgesehen sind.

4. Kalibriervorrichtung gemäß einem der Ansprüche 1 bis 3, **dadurch gekennzeichnet,** daß mindestens zwei Vakuumkammern (5) vorgesehen sind.

5. Kalibriervorrichtung gemäß Anspruch 2 oder Anspruch 4, **dadurch gekennzeichnet,** daß die Vakuumkammer (5) bzw. die Vakuumkammern (5) in der Mitte des Konsolenprofils (3) und die Wasserkammern (10) beidseits der Vakuumkammer (5) bzw. der Vakuumkammern (5) angeordnet sind.

6. Kalibriervorrichtung gemäß Anspruch 3 oder Anspruch 4, **dadurch gekennzeichnet,** daß die Vakuumkammer (5) bzw. die Vakuumkammern (5) in der Mitte des Konsolenprofils (3) und die Wasserkammern (10) sowie die weiteren Kammern (14) beidseits der Vakuumkammer (5) bzw. der Vakuumkammern (5) angeordnet sind, wobei beidseits jeweils eine Wasserkammer (10) und eine weitere Kammer (14) vorgesehen sind.

7. Kalibriervorrichtung gemäß Anspruch 6, **dadurch gekennzeichnet,** daß die weiteren Kammern (14) im oberen Bereich des Konsolenprofils (3) zu dem Kalibrator (1) hin angeordnet sind, daß die weiteren Kammern (14) weniger breit als die Wasserkammern (10) sind und daß mindestens eine der Wasserkammern (10) schlauchlos mit der Unterseite des Kalibrators (1) verbindbar ist.

8. Kalibriervorrichtung gemäß Anspruch 1 oder Anspruch 2, **dadurch gekennzeichnet,** daß seitliche Bohrungen (11) durch das Konsolenprofil (3) bis in die Wasserkammer (10) bzw. in die Wasserkammern (10) vorgesehen sind.

9. Kalibriervorrichtung gemäß Anspruch 1, **dadurch gekennzeichnet,** daß seitliche Bohrungen (7) durch das Konsolenprofil (3) bis in die Vakuumkammer (5) vorgesehen sind.

10. Kalibriervorrichtung gemäß Anspruch 8, **dadurch gekennzeichnet,** daß die seitlichen Bohrungen (11) Anschlußstutzen (12) für Kühlwasserschläuche (13) aufweisen.

11. Kalibriervorrichtung gemäß Anspruch 9, **dadurch gekennzeichnet,** daß die seitlichen Bohrungen (7) Anschlußstutzen (8) für Schläuche (9) zur Vakuumversorgung des Kalibrators (1) aufweisen.

12. Kalibriervorrichtung gemäß Anspruch 1, **dadurch gekennzeichnet,** daß das Konsolenprofil (3) Verbindungsmittel (4) zum Befestigen von Kalibratoren (1) aufweist.

13. Kalibriervorrichtung gemäß Anspruch 1, **dadurch gekennzeichnet,** daß die durchgehende Vakuumkammer (5) in dem Konsolenprofil (3) unterteilbar ist.

## Claims

1. A calibrating device for plastic profile, consisting of at least one water-cooled calibrator on the inner contour of which a plastic profile is calibrated by means of vacuum, **characterised in that** underneath the calibrator 1, a profiled base unit (3) is provided which extends over the length of the calibrator (1) or calibrators (1) and contains at least one continuous water tank (10) and at least one continuous vacuum chamber (5), the vacuum chamber (5) being connectable to the underside of the calibrator (1) without the need for hosing.

2. The calibrating device of claim 1, **characterised in that** in that at least two continuous water tanks (10) are provided.

3. The calibrating device of claim 1 or claim 2, **characterised in that** at least one, preferably two additional chambers (14) are provided.

4. A calibrating device according to one of claims 1 to 3, **characterised in that** at least two vacuum chambers (5) are provided.

5. The calibrating device of claim 2 or claim 4, **characterised in that** the vacuum chamber (5) or vacuum chambers (5) are located in the centre of the profiled base unit (3) and the water tanks (10) on either side of the vacuum chamber (5) or the vacuum chambers (5).

6. The calibrating device of claim 3 or claim 4, **characterised in that** the vacuum chamber (5) or vacuum chambers (5) are located in the centre of the profiled base unit (3) and the water tanks (10) as well as the additional chambers (14) on either side of the vacuum chamber (5) or vacuum chambers (5), there being one water tank (10) and one additional chamber (14) provided on each side.

7. The calibrating device of claim 6, **characterised in that** the additional chambers (14) are located in the upper part of the profiled base unit (3), nearer the calibrator (1), that the additional chambers (14) are narrower than the water tanks (10) and that at least one of the water tanks (10) can be connected without hosing to the underside of the calibrator (1).

8. The calibrating device of claim 1 or claim 2, **characterised in that** lateral holes (11) are provided in the profiled base unit (3), which extend through the profiled base unit (3) to the water tank (10) or water tanks (10).

9. The calibrating device of claim 1, **characterised in that** lateral holes (7) are provided in the profiled base unit (3), which extend through the profiled base unit (3) to the vacuum chamber (5).

10. The calibrating device of claim 8, **characterised in that** the holes (11) have fittings (12) for cooling-water hoses (13).

11. The calibrating device of claim 9, **characterised in that** the lateral holes (7) have fittings (8) for hoses (9) for the supply of vacuum to the calibrator (1).

12. The calibrating device of claim 1, **characterised in that** the profiled base unit (3) has connecting means (4) for attaching the calibrators (1).

13. The calibrating device of claim 1, **characterised in that** the continuous vacuum chamber (5) in the profiled base unit (3) can be sub-divided.

## Revendications

1. Dispositif de calibrage pour profilés en matière plastique, composé d'au moins un calibreur refroidi à l'eau sur le contour intérieur duquel un profilé en matière plastique est calibré au moyen du vide, **caractérisé en ce qu**'il est prévu au-dessous du calibreur
(1) un profilé de console (3) qui s'étend sur la longueur du ou des calibreur(s) (1) et qui comprend au moins un compartiment d'eau (10) continu et au moins un compartiment de vide (5) continu, le compartiment de vide (5) pouvant être raccordé sans tuyau au côté inférieur du calibreur (1).

2. Dispositif de calibrage selon la revendication 1, **caractérisé en ce qu**'au moins deux compartiments d'eau (10) continus sont prévus.

3. Dispositif de calibrage selon la revendication 1 ou 2, **caractérisé en ce qu**'il est prévu au moins un compartiment supplémentaire (14), de préférence deux.

4. Dispositif de calibrage selon l'une des revendications 1 à 3, **caractérisé en ce qu**'au moins deux compartiments de vide (5) sont prévus.

5. Dispositif de calibrage selon la revendication 2 ou 4, **caractérisé en ce que** le ou les compartiment(s) de vide (5) sont disposés au centre du profilé de console (3) et les compartiments d'eau (10) sont disposés de part et d'autre du ou des compartiment(s) de vide (5).

6. Dispositif de calibrage selon la revendication 3 ou 5, **caractérisé en ce que** le ou les compartiment(s) de vide (5) sont disposés au centre du profilé de console (3) et les compartiments d'eau (10) ainsi que les compartiments supplémentaires (14) sont disposés de part et d'autre du ou des compartiment(s) de vide (5), à chaque fois un compartiment d'eau (10) et un compartiment supplémentaire (14) étant prévus de chaque côté.

7. Dispositif de calibrage selon la revendication 6, **caractérisé en ce que** les compartiments supplémentaires (14) sont disposés dans le domaine supérieur du profilé de console (3) vers le calibreur, que les compartiments supplémentaires (14) sont moins larges que les compartiments d'eau (10) et qu'au moins l'un des compartiments d'eau (10) est relié sans tuyau au côté inférieur du calibreur (1).

8. Dispositif de calibrage selon la revendication 1 ou 2, **caractérisé en ce que** des trous latéraux (11) sont prévus au travers du profilé de console (3) jusque dans le ou les compartiment(s) d'eau (10).

9. Dispositif de calibrage selon la revendication 1, **caractérisé en ce que** des trous latéraux (7) sont prévus au travers du profilé de console (3) jusque dans le compartiment de vide (5).

10. Dispositif de calibrage selon la revendication 8, **caractérisé en ce que** les trous latéraux (11) présentent des tubulures de raccord (12) pour les tuyaux d'eau de refroidissement (13).

11. Dispositif de calibrage selon la revendication 9, **caractérisé en ce que** les trous latéraux (7) présentent des tubulures de raccord (8) pour les tuyaux (9) d'approvisionnement en vide du calibreur (1).

12. Dispositif de calibrage selon la revendication 1, **caractérisé en ce que** le profilé de console (3) est muni de moyens d'assemblage (4) pour fixer des calibreurs (1).

13. Dispositif de calibrage selon la revendication 1, **caractérisé en ce que** le compartiment de vide (5) continu peut être sous-divisé dans le profilé de console (3).
